# EUROPÄISCHE PATENTSCHRIFT

(11) **EP 3 795 346 B1**
(45) Veröffentlichungstag und Bekanntmachung des Hinweises auf die Patenterteilung: **25.10.2023**
(21) Anmeldenummer: 20192772.0
(22) Anmeldetag: 25.08.2020
(51) Int. Cl.: B32B 3/02, B32B 5/02, B32B 27/12, B32B 27/18, B32B 27/20, B32B 27/32, C08J 5/00

(54) **BAND, INSBESONDERE NARBBAND, SOWIE DESSEN HERSTELLUNG UND VERWENDUNG**
STRIP, IN PARTICULAR GRAINED STRIP, ITS PRODUCTION AND USE
BANDE, EN PARTICULIER BANDE NAR, AINSI QUE SA FABRICATION ET SON UTILISATION

(30) Priorität: 20.09.2019 DE 102019214336
(43) Veröffentlichungstag der Anmeldung: 24.03.2021
(73) Patentinhaber: Benecke-Kaliko AG, 30419 Hannover (DE)
(72) Erfinder: Taczkowski, Reiner, 30419 Hannover (DE); Band, Florian, 30419 Hannover (DE)
(74) Vertreter: Continental Corporation

(56) Entgegenhaltungen:
- US-A1- 2012 328 842

## Beschreibung

Die Erfindung betrifft ein Band, insbesondere ein Narbband, sowie ferner ein Verfahren zum Herstellen eines solchen Bandes und die Verwendung eines solchen Bandes gemäß den Oberbegriffen der Patentansprüche 1, 11 und 14.

Derartige Bänder werden beispielsweise als Werkzeug zur Herstellung von Kunststofffolien, aber auch Kunstleder eingesetzt.

So offenbart beispielsweise die deutsche Offenlegungsschrift DE 44 22 871 A1 ein derartiges Band. Das dortige Band weist eine reißfeste Schicht auf, die mit einer Kunststoffschicht aus Polypropylen und gegebenenfalls Anteilen von Polyethylen versehen ist. Ein Nachteil des dortigen Bandes besteht darin, dass das gemäß der DE 44 22 871 A1 für die dortige Oberflächenschicht eingesetzte Polymer, nämlich im Wesentlichen Polypropylen, hinsichtlich seiner Einsatztemperatur limitiert ist und eine Dauergebrauchstemperatur von maximal 160°C nicht überschritten werden darf. Diese Limitierung der Dauergebrauchstemperatur bei dem derzeit bekannten Band zur Herstellung von Kunststofffolien gemäß der DE 44 22 871 A1 begrenzt in nachteiliger Weise das Einsatzgebiet dieses bekannten Bandes und darüber hinaus auch die mit einem solchen Band fahrbaren Produktionsgeschwindigkeiten, was beispielsweise bei der Herstellung einer Polyurethanfolie in der Konsequenz zu erhöhten Emissionen führt.

Die US 2012/0328842 A1 offenbart dampfdurchlässige, im wesentlichen wasserundurchlässige Mehrschichtartikel sowie verwandte Produkte und Verfahren.

Der Erfindung liegt die Aufgabe zugrunde, ein Band zur Herstellung von Kunststofffolien sowie ein Verfahren zu dessen Herstellung und Verwendung zur Verfügung zu stellen, das die oben genannten Probleme löst, bei erhöhter Dauergebrauchstemperatur einsatzfähig ist und darüber hinaus einfach und kostengünstig herstellbar und, insbesondere in herkömmlichen Maschinen, anwendbar ist.

Diese Aufgabe wird durch ein Band gemäß Patentanspruch 1, ein Verfahren zur Herstellung eines solchen Bandes gemäß Patentanspruch 11 und die Verwendung eines solchen Bandes gemäß Patentanspruch 14 gelöst.

Insbesondere wird die Aufgabe durch ein Band, insbesondere Narbband, zur Herstellung von Folien, insbesondere Kunststoff- oder Elastomer-, wie beispielsweise Kautschukfolien, mit einer Trägerschicht aus einem textilen Flächengebilde, insbesondere einem Gewebe, gelöst, wobei das Band auf wenigstens einer ersten Bandseite eine, vorzugsweise strukturierte, Oberflächenschicht aus Polymethylpenten aufweist.

Ein wesentlicher Punkt der Erfindung besteht hierbei darin, dass das erfindungsgemäße Band zum einen als Basis eine gleichzeitig flexible, jedoch auch robuste Trägerschicht aus einem textilen Flächengebilde aufweist, die beispielsweise aus einem Gewebe, wie beispielsweise einem Glasfasergewebe, bestehen kann und zum anderen eine Oberflächenschicht aus einem temperaturbeständigen Material, nämlich aus Polymethylpenten, aufweist.

Auf diese Weise ist zum einen gewährleistet, dass das erfindungsgemäße Band flexibel und gleichzeitig reißfest ausgebildet ist, während seine Oberflächenschicht aus Polymethylpenten eine Dauergebrauchstemperatur oberhalb von 160°C, vorzugsweise im Bereich von 170°C ±5°C bis 200°C ±10°C, ermöglicht.

Ein wichtiger Punkt der Erfindung besteht hierbei darin, dass diese durch den Einsatz von Polymethylpenten als Oberflächenschicht erreichbare hohe Dauergebrauchstemperatur wesentlich höhere Produktionsgeschwindigkeiten, insbesondere bei der Herstellung von Polyurethanfolien, ermöglicht.

Ein weiterer wichtiger Vorteil des erfindungsgemäßen Bandes besteht ferner darin, dass es, wiederum aufgrund seiner gegenüber dem Stand der Technik deutlich erhöhten Einsatztemperatur, möglich ist, hochsiedende Lösungsmittel und Hilfsstoffe unmittelbar während des Herstellungsprozesses der Kunststofffolie auszuheizen und damit aus dem herzustellenden Produkt zu entfernen. Gegenwärtig und gemäß dem Stand der Technik müssen derartige Lösungsmittel und Hilfsstoffe, die in der Regel einen Siedepunkt im Bereich von 130°C bis 150°C haben, in einem aufwändigen zusätzlichen und zumeist auch externen Arbeitsgang abgeheizt werden. Ein solcher zusätzlicher Arbeitsgang, der den Herstellungsprozess einer Kunststofffolie deutlich verkompliziert, kann bei einer Verwendung des erfindungsgemäßen Bandes in vorteilhafter Weise entfallen.

Ein weiterer Vorteil des erfindungsgemäßen Bandes und insbesondere auch der erfindungsgemäß eingesetzten Oberflächenschicht aus Polymethylpenten besteht ferner darin, dass das erfindungsgemäße Band auf einfache Weise mit vorhandenen Walzen geprägt werden kann und insbesondere die Oberflächenschicht aus Polymethylpenten selbst sehr feine dreidimensionale Strukturen sehr exakt und dauerhaft abbilden kann, wobei diese dreidimensionalen Strukturen auch bei den gewünschten hohen Dauergebrauchstemperaturen von bis zu 200°C ±10°C mit sehr hoher Genauigkeit erhalten bleiben.

In äußerst fortlaufender Weise lässt sich das erfindungsgemäße Band somit zur Herstellung einer großen Bandbreite von unterschiedlichen Folien, beispielsweise aus Polyurethan (PUR), aber auch Polyvinylchlorid (PVC), einsetzen, mit welchen beispielsweise unterschiedliche Arten von Kunstleder hergestellt werden können.

Gemäß einer Ausführungsform der Erfindung ist zwischen der textilen Trägerschicht und der Oberflächenschicht eine Polyolefinschicht angeordnet. Diese Polyolefinschicht dient zum einen einer Verbindung der textilen Trägerschicht mit der Oberflächenschicht aus Polymethylpenten sowie zum anderen dazu, eine etwaige Oberflächenstruktur der textilen Trägerschicht gegenüber der Oberflächenschicht aus Polymethylpenten abzuschirmen, sodass die etwaige Oberflächenstruktur der textilen Trägerschicht sich nicht in der Oberflächenschicht aus Polymethylpenten widerspiegelt. Auf diese Weise bleibt die volle Gestaltungsmöglichkeit bei der Strukturierung der Oberflächenschicht aus Polymethylpenten erhalten, sodass diese Oberflächenschicht unabhängig von der textilen Trägerschicht gestaltet und mit jedweder gewünschten Prägung oder anderweitigen Oberflächenstrukturierung versehen werden kann.

Gemäß einer weiteren Ausführungsform der Erfindung ist die Polyolefinschicht mittels einer Haftvermittlerschicht mit der Trägerschicht verbunden. Die Verwendung einer Haftvermittlerschicht zwischen der Polyolefinschicht und der Trägerschicht ermöglicht eine optimale Haftung zwischen diesen beiden Schichten und zwar nahezu unabhängig von den jeweiligen Materialien der Polyolefinschicht und der textilen Trägerschicht. Gemäß einer alternativen Ausführungsform der Erfindung ist es jedoch auch denkbar die Polyolefinschicht in heißem Zustand auf die textile Trägerschicht aufzubringen, sodass die Polyolefinschicht zumindest partiell in das Gewebe der textilen Trägerschicht eindringt und mit dieser "vernetzt", d. h. in dem Gewebe der textilen Trägerschicht verankert.

Erfindungsgemäß hat die Oberflächenschicht aus Polymethylpenten eine Schichtdicke im Bereich von 2 µm bis 200 µm, bevorzugt im Bereich von 5 µm bis 150 µm und besonders bevorzugt im Bereich von 10 µm bis 100 µm. Erfindungsgemäß ist es somit in vorteilhafter Weise möglich, die Schichtdicke der Polymethylpentenschicht so zu wählen, dass unterschiedlichste Prägungen des Bandes sowie gegebenenfalls nur der Polymethylpentenschicht möglich sind. Darüber hinaus ist es unter Einhaltung dieser Schichtdicken möglich, das Band optimal an seinen jeweiligen Einsatzzweck und seine jeweilige Einsatztemperatur anzupassen. So kann die Schichtdicke aus Polymethylpenten beispielsweise sehr dünn bemessen sein, wenn die Einsatztemperatur nur geringfügig über der üblichen Einsatztemperatur eines herkömmlichen Bandes mit Polypropylenoberfläche liegt, während die Schichtdicke der Polymethylpentenschicht umso dicker gewählt werden kann, je höher die gewünschte Einsatztemperatur ist, da die unter der Polymethylpentenschicht liegende Polyolefinschicht auf diese Weise gut gegenüber der höheren Verarbeitungstemperatur der herzustellenden Kunststofffolie abgeschirmt ist.

Gemäß einer Ausführungsform der Erfindung weist die Polyolefinschicht Polypropylen und/oder Polyethylen auf oder besteht vollständig aus einer dieser beiden Substanzen oder aus einer Mischung daraus. Die Verwendung von Polypropylen und/oder Polyethylen hat sich erfindungsgemäß als vorteilhaft erwiesen, da diese beiden Substanzen äußerst kostengünstig und einfach zu handhaben sind.

Gemäß einer bevorzugten Ausführungsform der Erfindung weist die Polyolefinschicht einen oder mehrere Füllstoff(e) mit einem Füllstoffanteil im Bereich von 10 Gew.-% bis 80 Gew.-%, vorzugsweise im Bereich von 20 Gew.-% bis 70 Gew.-% und besonders bevorzugt im Bereich von 30 Gew.-% bis 60 Gew.-% auf. Als Füllstoff(e) kommen erfindungsgemäß Calciumsilikat, insbesondere Wollastonit, Magnesiumsilikathydrat, insbesondere Talkum, und Calciumcarbonat, insbesondere Kreide, oder auch Mischungen der genannten Substanzen in Betracht.

Durch die Verwendung der genannten Füllstoff(e) in den genannten Konzentrationen kann die thermische Ausdehnung der erfindungsgemäß verwendeten Polyolefinschicht, insbesondere Polypropylenschicht, in vorteilhafter Weise verringert werden. Darüber hinaus führt der Füllstoffanteil in ebenso vorteilhafter Weise zu einer Erhöhung der Steifigkeit der Polyolefinschicht, insbesondere der Polypropylenschicht, sowie zu einer Verringerung des Folienschrumpfes und zur Verbesserung eines Wärmeübergangs.

Die als Basis des erfindungsgemäßen Bandes verwendete Trägerschicht enthält gemäß einer vorteilhaften Ausführungsform der Erfindung Fasern, insbesondere aus Polyester, Polyethylenterephtalat, Polyamid, Polyaramid, Baumwolle und/oder Glasfasern und/oder ist aus einem Gewebe aus einem oder mehreren der genannten Materialien, insbesondere aus Baumwollgewebe und/oder Glasfasergewebe hergestellt.

Wie vorerwähnt, ist das erfindungsgemäße Band vorzugsweise geprägt, wobei anhand der Prägung des Bandes beispielsweise Kunstleder mit einer jeweils unterschiedlichen gewünschten Textur und Haptik hergestellt werden kann.

Des Weiteren wird die erfindungsgemäße Aufgabe auch durch ein Verfahren zur Herstellung eines Bandes, insbesondere Narbbandes, gemäß vorstehenden Ausführungen gelöst, wobei die folgenden Schritte zur Erzeugung eines Gesamtschichtverbundes durchgeführt werden:
- Zurverfügungstellen einer Trägerschicht aus einem textilen Flächengebilde, vorzugsweise einer Gewebeschicht;
- Herstellen einer Polyolefinfolie;
- Beschichten, insbesondere Kaschieren, der Trägerschicht mit der Polyolefinfolie zur Erzeigung einer Polyolefinschicht;
- Beschichten, insbesondere Kaschieren, der Polyolefinschicht mit einer Schicht aus Polymethylpenten zur Erzeugung einer Oberflächenschicht; sowie
- gegebenenfalls Prägen des hergestellten Gesamtschichtverbundes, beispielsweise mittels einer Prägewalze.

Die Trägerschicht wird hierbei vorzugsweise mittels einer Haftvermittlerschicht, wie beispielsweise einem Klebstoff, respektive einer Klebstoffschicht, mit der Polyolefinfolie kaschiert.

Des Weiteren wird die Polyolefinschicht, insbesondere bei einer Temperatur im Bereich von 240°C ±5°C, mit einer Folie aus Polymethylpenten beschichtet, insbesondere kaschiert.

Im Übrigen wird die erfindungsgemäße Aufgabe auch durch eine Verwendung eines Bandes, insbesondere Narbbandes, gemäß vorstehenden Ausführungen und/oder hergestellt mit einem vorstehend genannten Verfahren zur Herstellung von Kunstleder, insbesondere aus Polyurethan oder Polyvinylchlorid, bei einer Dauergebrauchstemperatur von mehr als 155°C, vorzugsweise bei einer Dauergebrauchstemperatur von mehr als 160°C und besonders bevorzugt bei einer Dauergebrauchstemperatur im Bereich von 170°C ±5°C bis200°C ±10°C, gelöst.

Zusammenfassend kann der Gegenstand der vorliegenden Erfindung somit wie folgt festgehalten werden.

Der Gegenstand der vorliegenden Erfindung ist ein temperaturbeständiges Band zur Herstellung von Kunststofffolien, beispielsweise zur Herstellung von Kunstleder auf Polyurethanbasis.

So besteht ein Nachteil bekannter derartiger Bänder in deren mangelhafter Temperaturbeständigkeit, wobei mit einem aktuell eingesetzten Polymer, wie beispielsweise Polypropylen als Oberflächenschicht nur eine Dauergebrauchstemperatur von ca. 155°C, respektive maximal 160°C erreicht werden kann. Dies führt in der Konsequenz zu niedrigen Produktionsgeschwindigkeiten und erhöhten Emmissionen, die bei einem aus dem Stand der Technik bekannten Band unvermeidlich sind.

Die Basis des erfindungsgemäßen Narbbandes ist eine textiler Träger aus einem Gewebe. In einem weiteren Schritt wird ein Compound bestehend aus Polypropylen und einem anorganischen Füllstoff zu einer Folie kalandriert. Diese Folie wird in einem thermischen Kaschierverfahren mit Hilfe einer Kleberschicht auf das Gewebe aufgebracht und anschließend mit einer Prägung versehen.

Gemäß einer besonderen Ausführungsform der Erfindung wird ferner eine Folie aus Polymethylpenten von einem Typ mit einem Schmelzpunkt > 230°C und einem E-Modul > 1800 MPa sowie mit einer Dicke zwischen 10 µm bis 100 µm auf die Polypropylen-Schicht des zuvor hergestellten Roh-Narbbandes kaschiert.

Die Kaschierung der Polymethylpentenschicht erfolgt dabei ebenfalls thermisch zwischen zwei beheizten Walzen. Des Weiteren wird die Polyolefinschicht, insbesondere Polypropylen-Schicht, zur Verringerung der thermischen Ausdehnung, zur Erhöhung der Steifigkeit, zur Verringerung des Folienschrumpfes und zur Verbesserung des Wärmeübergangs mit einem Füllstoff versehen. Hierzu wird erfindungsgemäß Wollastonit, Talkum oder Kreide in Konzentrationen von 30% bis 60% eingesetzt.

Die Schicht aus Polymethylpenten dient zur Verbesserung der Wärmestabilität während der Herstellung von Polyurethan-Kunstleder. Insbesondere feinste Narbinformationen werden dadurch bei hohen Temperaturen von > 155°C, > 160°C abgebildet.

Bei der Verwendung des erfindungsgemäßen Bandes kann eine Dauergebrauchstemperatur von im Wesentlichen 170°C bis 210°C erreicht werden, wodurch das Polyurethan besser und schneller vernetzt und höhere Produktionsgeschwindigkeiten ermöglicht werden. Des Weiteren können Hochsieder in PUR Rezepturen, wie beispielsweise Lösemittel, Hilfsstoffe oder dergleichen Inhaltsstoffe dre Rezeptur mit einem Siedepunkt zwischen 130 - 150°C, die aktuell durch einen zusätzlichen, gegebenenfalls externen Arbeitsgang abgeheizt werden müssen, bei einer Verwendung des temperaturbeständigen erfindungsgemäßen Narbbands in situ, also während der eigentlichen Herstellung der gewünschten Kunststofffolie, abgeheizt werden, sodass ein im Stand der Technik notwendiger zusätzlicher Arbeitsgang entfallen kann.

Das erfindungsgemäße Laminat aus einem Polyolefin, insbesondere Polypropylen-Narbband mit Polymethylpenten-Deckschicht, kann dann mit vorhandenen Prägewalzen genarbt werden.

Da das erfindungsgemäße Band mit üblichen Walzen prägbar ist, ist mit einem solchen neuen erfindungsgemäßen Band die gleiche Oberflächenvielfalt wie bisher realisierbar, wobei eine Produktion von Polyurethanfolien endlos möglich ist. Matrizen können benutzt werden, müssen aber nicht benutzt werden.

Darüber hinaus kann bei einer Dauergebrauchstemperatur von 200°C - 210°C auch PVC geliert werden, wodurch sich ganz neue Möglichkeiten für eine Herstellung von PVC-Kunstleder eröffnen.

Weitere Ausführungsformen der Erfindung ergeben sich aus den Unteransprüchen.

Nachfolgend wird die Erfindung anhand eines Ausführungsbeispiels beschrieben, das anhand einer Abbildung näher erläutert wird. Hierbei zeigt:

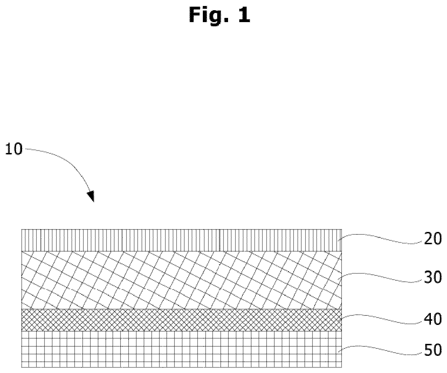

- Fig. 1: eine schematische Darstellung eines erfindungsgemäßen Narbbandes gemäß einer Ausführungsform der Erfindung.

In der nachfolgenden Beschreibung werden für gleiche und gleichwirkende Teile dieselben Bezugsziffern verwendet.

Fig. 1 zeigt eine schematische Darstellung eines erfindungsgemäßen Narbbandes 10 gemäß einer Ausführungsform der Erfindung, wobei eine Trägerschicht 50, die aus einer gewebten Glasfaserschicht hergestellt ist, mittels einer Klebstoffschicht, respektive einer Haftvermittlerschicht 40, mit einer Polyolefinschicht 30 verbunden ist. Die Polyolefinschicht 30 besteht im Wesentlichen aus Polypropylen sowie Füllstoffen, nämlich Wollastonit, Talkum oder Kreide in einer Gesamtkonzentration von 50%, und ist ihrerseits mit einer Oberflächenschicht 20 verbunden, die eine Schichtdicke von 80 µm aufweist.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Band
- 20: Oberflächenschicht
- 30: Polyolefinschicht
- 40: Haftvermittlerschicht
- 50: Trägerschicht

## Patentansprüche

1. Band (10), insbesondere Narbband, zur Herstellung von Folien, insbesondere Kunststoff- oder Elastomer-, wie beispielsweise Kautschukfolien, mit einer Trägerschicht (50) aus einem textilen Flächengebilde, insbesondere einem Gewebe,
**dadurch gekennzeichnet, dass**
das Band (10) auf wenigstens einer ersten Bandseite eine, vorzugsweise strukturierte, Oberflächenschicht (20) aus Polymethylpenten aufweist.

2. Band nach Anspruch 1,
**dadurch gekennzeichnet, dass**
zwischen der Trägerschicht (50) und der Oberflächenschicht (20) eine Polyolefinschicht (30) angeordnet ist.

3. Band nach einem der vorhergehenden Ansprüche,
**dadurch gekennzeichnet, dass**
die Polyolefinschicht (30) mittels einer Haftvermittlerschicht (40) mit der Trägerschicht (50) verbunden ist.

4. Band nach einem der vorhergehenden Ansprüche,
**dadurch gekennzeichnet, dass**
die Oberflächenschicht (20) aus Polymethylpenten eine Schichtdicke im Bereich von 2 µm bis 200 µm, bevorzugt im Bereich von 5 µm bis 150 µm und besonders bevorzugt im Bereich von 10 µm bis 100 µm hat.

5. Band nach einem der vorhergehenden Ansprüche,
**dadurch gekennzeichnet, dass**
die Polyolefinschicht (30) Polypropylen und/oder Polyethylen aufweist.

6. Band nach einem der vorhergehenden Ansprüche,
**dadurch gekennzeichnet, dass**
die Polyolefinschicht (30) einen oder mehrere Füllstoff(e) aufweist.

7. Band nach Anspruch 6,
**dadurch gekennzeichnet, dass**
die Polyolefinschicht (30) einen Füllstoffanteil im Bereich von 10 Gew.-% bis 80 Gew.-%, vorzugsweise im Bereich von 20 Gew.-% bis 70 Gew.-% und besonders bevorzugt im Bereich von 30 Gew.-% bis 60 Gew.-% aufweist.

8. Band nach einem der vorhergehenden Ansprüche 6 oder 7,
**dadurch gekennzeichnet, dass**
der oder die Füllstoff(e) ausgewählt sind aus Calciumsilikat, insbesondere Wollastonit, Magnesiumsilikathydrat, insbesondere Talkum, und Calciumcarbonat, insbesondere Kreide, oder aus Mischungen der genannten Substanzen.

9. Band nach einem der vorhergehenden Ansprüche,
**dadurch gekennzeichnet, dass**
die Trägerschicht (50) Fasern, insbesondere aus Polyester, Polyethylenterephtalat, Polyamid, Polyaramid, Baumwolle und/oder Glasfasern, enthält und/oder aus einem Gewebe aus einem oder mehreren der genannten Materialien, insbesondere aus Baumwollgewebe und/oder Glasfasergewebe besteht.

10. Band nach einem der vorhergehenden Ansprüche,
**dadurch gekennzeichnet, dass**
das Band (10) geprägt ist.

11. Verfahren zur Herstellung eines Bandes (10), insbesondere Narbbandes, nach einem der vorhergehenden Ansprüche,
**gekennzeichnet durch**
die folgenden Schritte zur Erzeugung eines Gesamtschichtverbundes:
- Zurverfügungstellen einer Trägerschicht (50) aus einem textilen Flächengebilde, vorzugsweise einer Gewebeschicht;
- Herstellen einer Polyolefinfolie;
- Beschichten, insbesondere Kaschieren, der Trägerschicht (50) mit der Polyolefinfolie zur Erzeugung einer Polyolefinschicht (30);
- Beschichten, insbesondere Kaschieren, der Polyolefinschicht (30) mit einer Schicht aus Polymethylpenten zur Erzeugung einer Oberflächenschicht (20); sowie
- gegebenenfalls Prägen des hergestellten Gesamtschichtverbundes, beispielsweise mittels einer Prägewalze.

12. Verfahren nach Anspruch 11,
**dadurch gekennzeichnet, dass**
die Trägerschicht (50) mittels einer Haftvermittlerschicht (40) mit der Polyolefinfolie beschichtet, insbesondere kaschiert, wird.

13. Verfahren nach einem der vorhergehenden Ansprüche 11 oder 12,
**dadurch gekennzeichnet, dass**
die Polyolefinschicht (30), insbesondere bei einer Temperatur im Bereich von 240°C ±5°C, mit einer Folie aus Polymethylpenten beschichtet, insbesondere kaschiert, wird.

14. Verwendung eines Bandes (10), insbesondere Narbbandes, nach einem der vorhergehenden Ansprüche 1 bis 10 und/oder hergestellt nach einem der vorhergehenden Ansprüche 11 bis 13 zur Herstellung von Kunstleder, insbesondere aus Polyurethan oder Polyvinylchlorid, insbesondere bei einer Dauergebrauchstemperatur von mehr als 155°C, vorzugsweise bei einer Dauergebrauchstemperatur von mehr als 160°C und besonders bevorzugt bei einer Dauergebrauchstemperatur im Bereich von 170°C ±5°C bis 200°C ±10°C.

## Claims

1. Tape (10), in particular grain tape, for producing films, in particular plastic or elastomer films, for example rubber films, having a carrier layer (50) made of a textile fabric, in particular a woven fabric,
**characterized in that**
the tape (10) comprises on at least a first tape side a, preferably structured, surface layer (20) of polymethylpentene.

2. Tape according to Claim 1,
**characterized in that**
a polyolefin layer (30) is arranged between the carrier layer (50) and the surface layer (20).

3. Tape according to either of the preceding claims,
**characterized in that**
the polyolefin layer (30) is joined to the carrier layer (50) by means of an adhesion promoter layer (40).

4. Tape according to any of the preceding claims,
**characterized in that**
the surface layer (20) of polymethylpentene has a layer thickness in the range from 2 µm to 200 µm, preferably in the range from 5 µm to 150 µm and particularly preferably in the range from 10 µm to 100 µm.

5. Tape according to any of the preceding claims,
**characterized in that**
the polyolefin layer (30) comprises polypropylene and/or polyethylene.

6. Tape according to any of the preceding claims,
**characterized in that**
the polyolefin layer (30) comprises one or more fillers.

7. Tape according to Claim 6,
**characterized in that**
the polyolefin layer (30) has a filler fraction in the range from 10% by weight to 80% by weight, preferably in the range from 20% by weight to 70% by weight and particularly preferably in the range from 30% by weight to 60% by weight.

8. Tape according to either of the preceding Claims 6 or 7,
**characterized in that**
the filler(s) are selected from calcium silicate, in particular wollastonite, magnesium silicate hydrate, in particular talc, and calcium carbonate, in particular chalk, or from mixtures of the recited substances.

9. Tape according to any of the preceding claims,
**characterized in that**
the carrier layer (50) contains fibres, in particular of polyester, polyethylene terephthalate, polyamide, polyaramid, cotton and/or glass fibres and/or consists of a woven fabric of one or more of the recited materials, in particular of cotton woven fabric and/or glass fibre woven fabric.

10. Tape according to any of the preceding claims,
**characterized in that**
the tape (10) is embossed.

11. Process for producing a tape (10), in particular grain tape, according to any of the preceding claims,
**characterized by**
the following steps for producing an overall layer composite:
- providing a carrier layer (50) of a textile fabric, preferably a woven fabric layer;
- producing a polyolefin film;
- coating, in particular laminating, the carrier layer (50) with the polyolefin film to produce a polyolefin layer (30);
- coating, in particular laminating, the polyolefin film (30) with a layer of polymethylpentene to produce a surface layer (20); and
- optionally embossing the overall layer composite produced, for example using an embossing roller.

12. Process according to Claim 11,
**characterized in that**
the carrier layer (50) is coated, in particular laminated, with the polyolefin film by means of an adhesion promoter layer (40).

13. Process according to either of the preceding Claims 11 or 12,
**characterized in that**
the polyolefin layer (30) is coated, in particular laminated, with a film of polymethylpentene, in particular at a temperature in the range of 240°C ± 5°C.

14. Use of a tape (10), in particular grain tape, according to any of the preceding Claims 1 to 10 and/or produced according to any of the preceding Claims 11 to 13 for producing artificial leather, in particular from polyurethane or polyvinyl chloride, in particular at a sustained-use temperature of more than 155°C, preferably at a sustained-use temperature of more than 160°C and particularly preferably at a sustained-use temperature in the range from 170°C ± 5°C to 200°C ± 10°C.

## Revendications

1. Ruban (10), en particulier ruban grenelé, pour la fabrication de feuilles, en particulier de feuilles en matériau synthétique ou en élastomère, comme par exemple des feuilles en caoutchouc, présentant une couche support (50) en une structure plane textile, en particulier un tissu, **caractérisé en ce que** le ruban (10) présente, au moins sur une première face de ruban, une couche surfacique (20), de préférence structurée, en polyméthylpentène.

2. Ruban selon la revendication 1, **caractérisé en ce qu'**une couche polyoléfinique (30) est agencée entre la couche support (50) et la couche surfacique (20).

3. Ruban selon l'une quelconque des revendications précédentes, **caractérisé en ce que** la couche polyoléfinique (30) est reliée à la couche support (50) au moyen d'une couche de promoteur d'adhérence (40).

4. Ruban selon l'une quelconque des revendications précédentes, **caractérisé en ce que** la couche surfacique (20) en polyméthylpentène présente une épaisseur de couche dans la plage de 2 µm à 200 µm, de préférence dans la plage de 5 µm à 150 µm, et de manière particulièrement préférée dans la plage de 10 µm à 100 µm.

5. Ruban selon l'une quelconque des revendications précédentes, **caractérisé en ce que** la couche polyoléfinique (30) présente du polypropylène et/ou du polyéthylène.

6. Ruban selon l'une quelconque des revendications précédentes, **caractérisé en ce que** la couche polyoléfinique (30) présente une ou plusieurs charge(s).

7. Ruban selon la revendication 6, **caractérisé en ce que** la couche polyoléfinique (30) présente une proportion de charge dans la plage de 10% en poids à 80% en poids, de préférence dans la plage de 20% en poids à 70% en poids et de manière particulièrement préférée dans la plage de 30% en poids à 60% en poids.

8. Ruban selon l'une quelconque des revendications précédentes 6 ou 7, **caractérisé en ce que** la ou les charge(s) est/sont choisie(s) parmi le silicate de calcium, en particulier la wollastonite, le silicate de magnésium hydraté, en particulier le talc, et le carbonate de calcium, en particulier la craie, ou parmi les mélanges des substances mentionnées.

9. Ruban selon l'une quelconque des revendications précédentes, **caractérisé en ce que** la couche support (50) contient des fibres, en particulier en polyester, poly(téréphtalate d'éthylène), polyamide, polyaramide, coton et/ou des fibres de verre et/ou est constituée par un tissu constitué par un ou plusieurs des matériaux mentionnés, en particulier par un tissu de coton et/ou un tissu de fibres de verre.

10. Ruban selon l'une quelconque des revendications précédentes, **caractérisé en ce que** le ruban (10) est gaufré.

11. Procédé pour la fabrication d'un ruban (10), en particulier d'un ruban grenelé, selon l'une quelconque des revendications précédentes, **caractérisé par** les étapes suivantes destinées à obtenir un composite stratifié total :
- mise à disposition d'une couche support (50) en une structure plane textile, en particulier d'une couche de tissu ;
- réalisation d'une feuille polyoléfinique ;
- revêtement, en particulier contrecollage, de la couche support (50) par la feuille polyoléfinique pour obtenir une couche polyoléfinique (30) ;
- revêtement, en particulier contrecollage, de la couche polyoléfinique (30) par une couche en polyméthylpentène pour obtenir une couche surfacique (20) ; ainsi que
- le cas échéant gaufrage du composite stratifié total fabriqué, par exemple au moyen d'un cylindre de gaufrage.

12. Procédé selon la revendication 11, **caractérisé en ce que** la couche support (50) est revêtue, en particulier contrecollée, par la feuille polyoléfinique au moyen d'une couche de promoteur d'adhérence (40).

13. Procédé selon l'une quelconque des revendications précédentes 11 à 12, **caractérisé en ce que** la couche polyoléfinique (30) est revêtue, en particulier contrecollée, par une feuille en polyméthylpentène, en particulier à une température dans la plage de 240°C ± 5°C.

14. Utilisation d'un ruban (10), en particulier d'un ruban grenelé, selon l'une quelconque des revendications précédentes 1 à 10 et/ou fabriqué selon l'une quelconque des revendications précédentes 11 à 13 pour la fabrication de cuir synthétique, en particulier à partir de polyuréthane ou de poly(chlorure de vinyle), en particulier à une température d'utilisation durable supérieure à 155°C, de préférence à une température d'utilisation durable supérieure à 160°C et de manière particulièrement préférée à une température d'utilisation durable dans la plage de 170°C ± 5°C à 200°C ± 10°C.
